(19)

(11) **EP 4 356 313 B1**

(12) **EUROPEAN PATENT SPECIFICATION**

(45) Date of publication and mention of the grant of the patent: **25.03.2026 Bulletin 2026/13**

(21) Application number: **22735932.0**

(22) Date of filing: **10.06.2022**

(51) International Patent Classification (IPC):
***G06N 20/00*** (2019.01) ***G06N 5/022*** (2023.01)
***G06F 11/30*** (2006.01) ***G06F 11/34*** (2006.01)
***H04L 41/14*** (2022.01) ***H04L 41/22*** (2022.01)
***H04L 43/045*** (2022.01)

(52) Cooperative Patent Classification (CPC):
**G06N 20/00; G06F 11/3006; G06F 11/3447; G06F 11/3466; G06N 5/022; H04L 41/145; H04L 43/022; H04L 43/045;** H04L 41/22; H04L 43/0888; H04L 43/16

(86) International application number: **PCT/FI2022/050400**

(87) International publication number: **WO 2022/263716 (22.12.2022 Gazette 2022/51)**

(54) **ANALYZING MEASUREMENT RESULTS OF A COMMUNICATIONS NETWORK**
ANALYSE VON MESSERGEBNISSEN EINES KOMMUNIKATIONSNETZWERKS
ANALYSE DE RÉSULTATS DE MESURE D'UN RÉSEAU DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.06.2021 FI 20215700**

(43) Date of publication of application: **24.04.2024 Bulletin 2024/17**

(73) Proprietor: **Elisa Oyj**
**00520 Helsinki (FI)**

(72) Inventors:
- **YU, Qi**
  **00520 Helsinki (FI)**
- **UURTIO, Viivi**
  **00520 Helsinki (FI)**

(74) Representative: **Espatent Oy**
**Kaisaniemenkatu 4**
**00100 Helsinki (FI)**

(56) References cited:
**US-A1- 2020 231 466**

- **REZAEI SAMIRA ET AL: "Automatic fault detection and diagnosis in cellular networks using operations support systems data", NOMS 2016 - 2016 IEEE/IFIP NETWORK OPERATIONS AND MANAGEMENT SYMPOSIUM, IEEE, 25 April 2016 (2016-04-25), pages 468 - 473, XP032918137, DOI: 10.1109/NOMS.2016.7502845**
- **VV.AA.: "Introduction to Machine Learning Contents", 13 July 2015 (2015-07-13), pages 1 - 456, XP055867550, Retrieved from the Internet <URL:http://www.datascienceassn.org/sites/default/files/Introduction%20to%20Machine%20Learning.pdf> [retrieved on 20211130]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 356 313 B1

## Description

### TECHNICAL FIELD

The present application generally relates to analyzing measurement results of a communications network or other target system.

### BACKGROUND

This section illustrates useful background information without admission of any technique described herein representative of the state of the art.

There are various automated measures that monitor operation of complex target systems, such as communications networks, in order to detect problems so that corrective actions can be taken.

For example anomaly detection models may be used for analyzing the measurement results to identify anomalous measurement results or data points that stand out from the rest of the data. Anomaly detection refers to identification of data points, items, observations, events or other variables that do not conform to an expected pattern of a given data sample or data vector. Anomaly detection models can be trained to learn the structure of normal data samples. The models output an anomaly score for an analysed sample, and the sample is classified as an anomaly, if the anomaly score exceeds some predefined threshold. There are various unsupervised and semi-supervised learning models that can be used in anomaly detection. Such models include for example k nearest neighbors (kNN), local outlier factor (LOF), principal component analysis (PCA), kernel principal component analysis, independent component analysis (ICA), isolation forest, autoencoder, angle-based outlier detection (ABOD), and others. Different models represent different hypotheses about how anomalous points stand out from the rest of the data.

A prior art solution is discussed in REZAEI SAMIRA ET AL: "Automatic fault detection and diagnosis in cellular networks using operations support systems data", NOMS 2016 - 2016 IEEE/IFIP NETWORK OPERATIONS AND MANAGEMENT SYMPOSIUM, IEEE, 25 April 2016 (2016-04-25), pages 468-473. Now a new approach is provided for analyzing measurement results of a communications network or other target system.

### SUMMARY

The appended claims define the scope of protection.

According to a first example aspect there is provided a computer implemented method according to independent claim 1 and associated dependent claims.

According to a second example aspect of the present invention, there is provided an apparatus comprising a processor and a memory including computer program code; the memory and the computer program code configured to, with the processor, cause the apparatus to perform the method of the first aspect or any related embodiment.

According to a third example aspect of the present invention, there is provided a computer program comprising computer executable program code which when executed by a processor causes an apparatus to perform the method of the first aspect or any related embodiment.

According to a fourth example aspect there is provided a computer program product comprising a non-transitory computer readable medium having the computer program of the third example aspect stored thereon.

Any foregoing memory medium may comprise a digital data storage such as a data disc or diskette, optical storage, magnetic storage, holographic storage, optomagnetic storage, phase-change memory, resistive random access memory, magnetic random access memory, solid-electrolyte memory, ferroelectric random access memory, organic memory or polymer memory. The memory medium may be formed into a device without other substantial functions than storing memory or it may be formed as part of a device with other functions, including but not limited to a memory of a computer, a chip set, and a sub assembly of an electronic device.

Different non-binding example aspects and embodiments have been illustrated in the foregoing. The embodiments in the foregoing are used merely to explain selected aspects or steps that may be utilized in different implementations. Some embodiments may be presented only with reference to certain example aspects. It should be appreciated that corresponding embodiments may apply to other example aspects as well.

### BRIEF DESCRIPTION OF THE FIGURES

Some example embodiments will be described with reference to the accompanying figures, in which:

- Fig. 1 shows an example scenario according to an example embodiment;
- Fig. 2 shows a block diagram of an apparatus according to an example embodiment; and
- Figs. 3-6 illustrate example methods according to certain embodiments in the context of a practical example.

### DETAILED DESCRIPTION

In the following description, like reference signs denote like elements or steps.

A challenge in analyzing measurement results from complex target systems, such as communications networks, life science applications and industrial processes, is that the amount of data is huge and therefore identification of most relevant anomalous measurement results and/or identification of most effective way to alleviate problems in the target system is not an easy task.

In the context of present disclosure, measurement results that are analyzed comprise hierarchical multidimensional data. The measurement results involve data that represents network performance of a communications network. In such case, the data may include for example network probe data or performance data such as key performance indicator values, signal level, throughput, number of users, number of dropped connections, number of dropped calls etc.

In yet other non-claimed alternatives, the measurement results may involve sensor data such as pressure, temperature, manufacturing time, yield of a production phase etc. of an industrial process. In connection with industrial processes, such as a semiconductor manufacturing process, the hierarchy levels may relate to different product layers, product parts, product assemblies, or different manufacturing phases. Still further, the measurement results may involve census data and/or enterprise sales data.

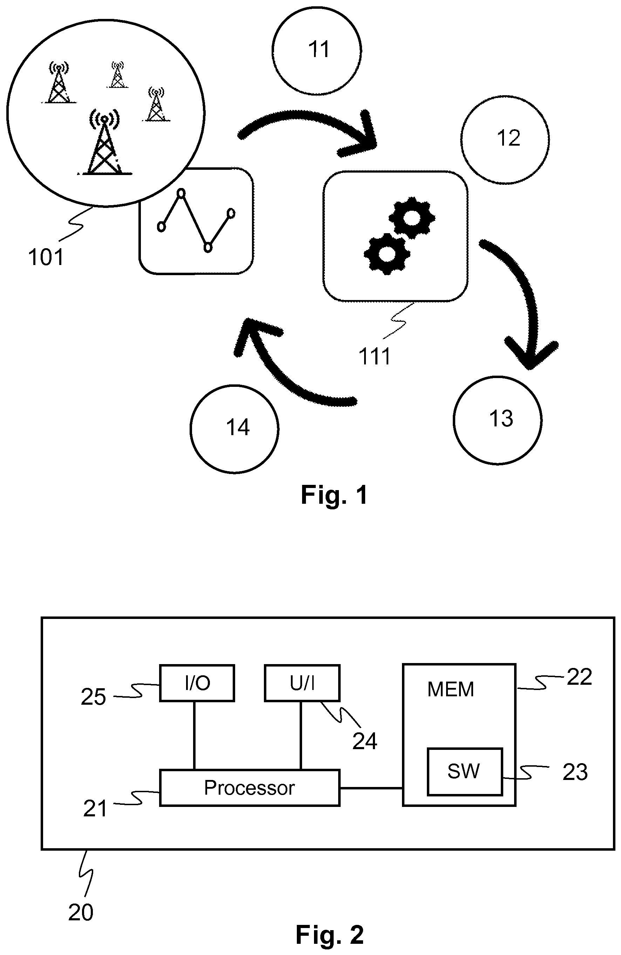

Fig. 1 shows an example scenario according to an embodiment. The scenario shows a communications network 101 as a target system and an automation system 111 configured to implement analysis of measurement results according to example embodiments. The communications network 101 comprises a plurality of physical network sites comprising base stations and other network devices serving users of the communications network 101.

In an embodiment of the invention the scenario of Fig. 1 operates as follows: In phase 11, the automation system 111 obtains measurement results from the communications network 101. The measurement results may be obtained directly from the communications network 101 or through some intermediate system. The measurement results may be obtained e.g. from OSS, Operations Support System, of the communications network 101. In phase 12, the automation system 111 analyzes the measurement results, and in phase 13, the automation system 111 outputs the results of the analysis. This output may then be used for manually or automatically controlling the communications network 101 in phase 14. The automatic controlling of the communications network 101 may be performed in the automation system 111 or in some other logically or physically separate entity. Controlling of the communications network 101 may involve adjusting parameters or settings, repairing or changing components, rolling out new functionalities or new components, restarting devices etc.

The process in the automation system 111 may be manually or automatically triggered. Further, the process in the automation system 111 may be periodically or continuously repeated.

Fig. 2 shows a block diagram of an apparatus 20 according to an embodiment. The apparatus 20 is for example a general-purpose computer or server or some other electronic data processing apparatus. The apparatus 20 can be used for implementing at least some embodiments of the invention. That is, with suitable configuration the apparatus 20 is suited for operating for example as the automation system 111 of foregoing disclosure.

The apparatus 20 comprises a communication interface 25; a processor 21; a user interface 24; and a memory 22. The apparatus 20 further comprises software 23 stored in the memory 22 and operable to be loaded into and executed in the processor 21. The software 23 may comprise one or more software modules and can be in the form of a computer program product.

The processor 21 may comprise a central processing unit (CPU), a microprocessor, a digital signal processor (DSP), a graphics processing unit, or the like. Fig. 2 shows one processor 21, but the apparatus 20 may comprise a plurality of processors.

The user interface 24 is configured for providing interaction with a user of the apparatus. Additionally or alternatively, the user interaction may be implemented through the communication interface 25. The user interface 24 may comprise a circuitry for receiving input from a user of the apparatus 20, e.g., via a keyboard, graphical user interface shown on the display of the apparatus 20, speech recognition circuitry, or an accessory device, such as a headset, and for providing output to the user via, e.g., a graphical user interface or a loudspeaker.

The memory 22 may comprise for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The apparatus 20 may comprise a plurality of memories. The memory 22 may serve the sole purpose of storing data, or be constructed as a part of an apparatus 20 serving other purposes, such as processing data.

The communication interface 25 may comprise communication modules that implement data transmission to and from the apparatus 20. The communication modules may comprise a wireless or a wired interface module(s) or both. The wireless interface may comprise such as a WLAN, Bluetooth, infrared (IR), radio frequency identification (RF ID), GSM/GPRS, CDMA, WCDMA, LTE (Long Term Evolution) or 5G radio module. The wired interface may comprise such as Ethernet or universal serial bus (USB), for example. The communication interface 25 may support one or more different communication technologies. The apparatus 20 may additionally or alternatively comprise more than one of the communication interfaces 25.

A skilled person appreciates that in addition to the elements shown in Fig. 2, the apparatus 20 may comprise other elements, such as displays, as well as additional circuitry such as memory chips, application-specific integrated circuits (ASIC), other processing circuitry for specific purposes and the like. Further, it is noted that only one apparatus is shown in Fig. 2, but the embodiments of the invention may equally be implemented in a cluster of shown apparatuses.

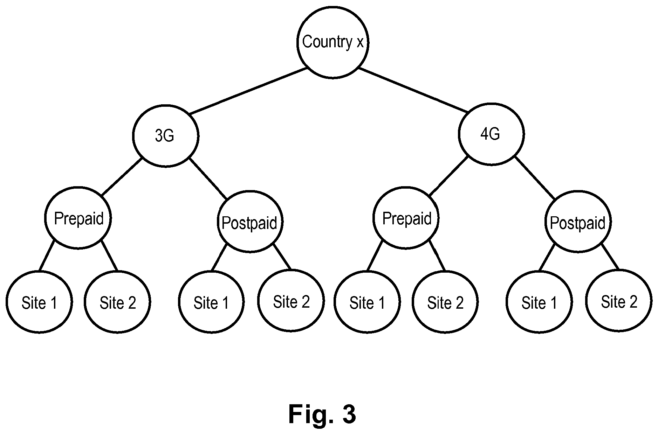

Figs. 3-6 illustrate example methods according to certain embodiments in the context of a simplified, practical example. The methods may be implemented in the automation system 111 of Fig. 1 and/or in the apparatus 20 of Fig. 2. The methods are implemented in a computer and do not require human interaction unless otherwise expressly stated. It is to be noted that the methods may however provide output that may be further processed by humans and/or the methods may require user input to start.

Fig. 3 shows an example of hierarchical network arrangement. At the highest hierarchy level there is communication network of country x in this example. There are 3G and 4G networks and both of these have prepaid and postpaid subscribers. The prepaid and postpaid subscribers use either a cell of site 1 or a cell of site 2. The sites are the lowest hierarchy level in this example. At the site level, there may be a plurality of subscribers connected to each site.

It is to be noted that the example of Fig. 3 is simplified example and in practice there are for example plurality of sites and each site could be further classified to distinct cells of the respective site.

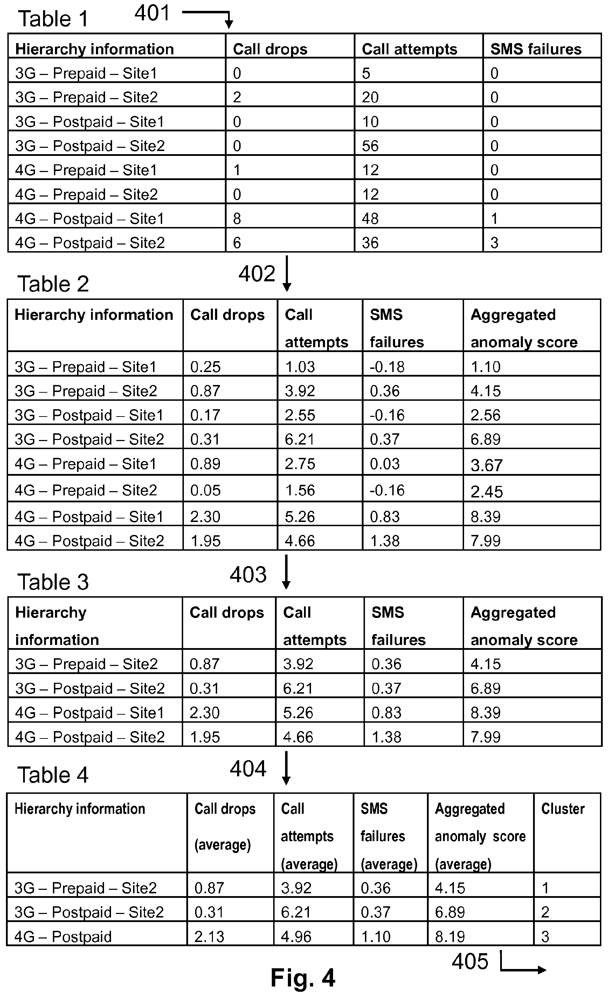

Fig. 4 illustrates processing of data according to an example embodiment of present disclosure in the context of an example data set related to the hierarchical network arrangement of Fig. 3.

In phase 401, a multivariate measurement result set is obtained from a communications network, e.g. from the network arrangement illustrated in Fig. 3. Table 1 of Fig. 4. shows the data that is obtained. There are multiple data entries (rows) and each data entry provides multiple data values. Further each row provides hierarchy information defining with which entities the entry is related to on different hierarchy levels.

The data values are values observed at the site level, i.e. at the lowest hierarchy level in this example. The data values represent network performance. The data values may include for example network probe data or performance data such as key performance indicator values, signal level, throughput, number of users, number of dropped connections, number of dropped calls etc. Practically any variables readily available in communications networks may be used.

In the shown example, the data values provide the number of call drops, the number of call attempts and the number of SMS failures. These numbers may provide the number of observed events aggregated over a predefined period of time. The period of time may be for example a 15 minute time period or a 5-30 minute time period, but equally some other time period could be used. The aggregation may be based on sum of values, mean of values or standard deviation of values. Additionally or alternatively, the values may be centered so that every column of the matrix has zero mean and unit variance. Still further, the values may be rounded.

The hierarchy levels may in general relate to subscription types (e.g. prepaid, postpaid) and/or network devices (e.g. base station controller, antenna) and/or technology types (e.g. 3G, 4G, 5G) and/or logical network entities (e.g. base station, cell).

In phase 402, anomaly detection is applied to the data values of table 1 in order to obtain anomaly scores for each data value of table 1. Further, an aggregated anomaly score is determined for each data entry of table 1 by aggregating the anomaly scores of the respective row. In the example of Fig. 4, the anomaly scores are aggregated by taking sum over the anomaly scores of the row.

For example RPCA (Robust Principal Component Analysis) can be used for performing the anomaly detection. Robust PCA is discussed for example in Candès, Emmanuel J., et al. "Robust principal component analysis?." Journal of the ACM (JACM) 58.3 (2011): 1-37. Some other anomaly detection method could be used, too.

The determined anomaly scores are shown in table 2 of Fig. 4.

In phase 403, data entries, for which the aggregated anomaly score fulfils predefined criteria, are chosen for further analysis. In an example embodiment, top n highest aggregated anomaly scores are determined to fulfil the predefined criteria. For example, depending on the distribution of the anomaly scores, a certain percentage of the top scores may be chosen, such as 5-10 % of all data entries or 5-50 top scores. Additionally or alternatively, aggregated anomaly scores that exceed a predefined threshold may be determined to fulfil the predefined criteria. The threshold may be for example 4-20. It is to be noted that the criteria may vary significantly depending on the number of parameters, the anomaly detection method that is being applied and/or the amount of data entries.

In the example of Fig. 4, aggregated anomaly scores that exceed a threshold of 4 are chosen. Thereby the data entries 3G-Prepaid-Site2 with aggregated anomaly score of 4.15, 3G-Postpaid-Site2 with aggregated anomaly score of 6.89, 4G-Postpaid-Site1 with aggregated anomaly score of 8.39, and 4G-Postpaid-Site2 with aggregated anomaly score of 7.99 are chosen.

The chosen data entries are shown in table 3 of Fig. 4.

By choosing only entries that fulfil the predefined criteria, one achieves that the analysis is focused on the most anomalous entries and the amount of data to be analyzed can be reduced. This may improve efficiency of the analysis.

In phase 404, the chosen entries are hierarchically clustered. Agglomerative clustering is performed whereby at least some of the chosen entries are combined together.

The following briefly discusses details of basic Agglomerative Hierarchical Clustering algorithm that may be used in phase 404.

1. Begin with N singleton clusters (each data entry is its own cluster). N = 4 in the example of Fig. 4 (the number of the chosen entries in table 3).

2. For each cluster, compute its dissimilarity to the other clusters (Euclidean distance and ward method are used in this example)

3. Merge the two most similar clusters. (smallest d, see equations below)

4. Repeat steps 1 and 2 until the last two clusters are merged into one.

5. Silhouette coefficients are computed for different amounts of clusters. (1, 2, 3,...). The amount of clusters, which maximizes the silhouette coefficient, is selected.

For anomalies $x = (x_1, x_{2,...,} x_n)$, and $y = (y_{1,} y_{2,...,} y_n)$, their dissimilarity $diss_{xy}$ is calculated as follows:

$$diss_{xy} = \sqrt{\sum_{i\,\in 1,\ldots,n}(x_i - y_i)^2} \ ,$$

where i=3 in the example of Fig. 4

For clusters $C_1$ *and* $C_2$, their dissimilarity $d_{AL}$ $(C_1,\ C_2)$ is calculated as follows:

$$d_{AL}(C_1, C_2) = \frac{1}{N_{C1}N_{C2}} \sum_{i\in C_1} \sum_{j\in C_2} diss_{ij} \ ,$$

where $N_{C_k}$ is the number of observations in cluster $C_k$.

The Silhouette score has a value range of [-1,1], which measures how close each observation in one cluster is to observations in the neighboring clusters. If the value is 1, the clusters are well apart from each other and clearly distinguished.

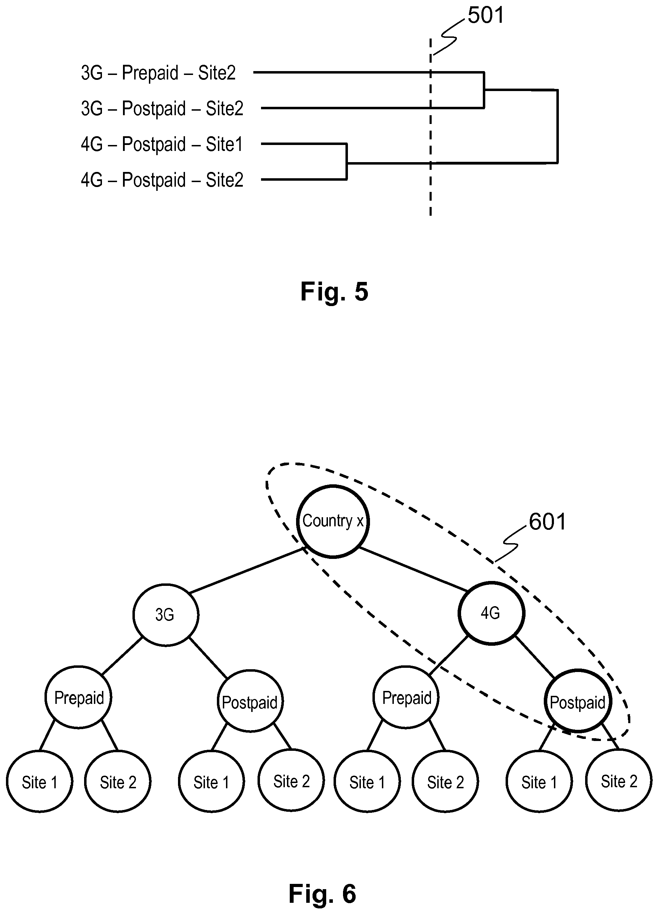

Fig. 5 illustrates clustering in phase 403 for the example of Fig. 4. First 4G-Postpaid-Site1 and 4G-postpaid-Site2 are combined, then 3G-Prepaid-Site2 and 3G-Postpaid-Site2 are combined, and then the resulting two clusters are combined. In the shown example, classification into three clusters maximizes the silhouette coefficient, and therefore it is chosen to classify the data entries into three clusters. This is shown by line 501.

Table 4 of Fig. 4 shows the resulting clusters. The anomaly scores of the clusters are determined by taking average of the anomaly scores of the members of the cluster.

In phase 405, the results of the analysis are provided for the purpose of deciding on further actions, e.g. controlling the communications network. The hierarchically clustered entries may be provided for identifying one or more anomalous entities on hierarchy levels above the lowest hierarchy level or above the observation level (i.e. the hierarchy level on which the data values of table 1 are originally observed). In the example of Fig. 4 4G-Postpaid may be identified to be such anomalous entity of a higher hierarchy level.

The hierarchically clustered entries (table 4 of Fig. 4) and/or the identified one or more anomalous entities (e.g. 4G-postpaid) on hierarchy levels above the lowest hierarchy level can be used for making decisions on controlling the communications network. The information may be analysed by network maintenance personnel to identify the most efficient way to improve operation of the network, i.e. to decide where to target network maintenance actions. Depending on the implementation this process may be at least partially automated. In the example of Fig. 4 it may be identified that fixing problems in 4G-Postpaid would be an efficient way to improve network performance.

It is to be noted that practical example embodiment is discussed in the context of communications network and measurement results from the communications network.

Without in any way limiting the scope, interpretation, or application of the claims appearing below, a technical effect of one or more of the example embodiments disclosed herein is improved analysis of measurement results of a complex target system, such as a communications network. Various embodiments suit well for analyzing large sets of multivariate measurement results. Such analysis is impossible or at least very difficult to implement manually.

A further technical effect is ability to identify anomalous entities of higher hierarchical level. In this way, targeting of network maintenance actions or other actions may be improved.

If desired, the different functions discussed herein may be performed in a different order and/or concurrently with each other.

Various embodiments have been presented. It should be appreciated that in this document, words comprise, include and contain are each used as open-ended expressions with no intended exclusivity.

The foregoing description has provided by way of non-limiting examples of particular implementations and embodiments a full and informative description of the best mode presently contemplated by the inventors for carrying out the invention. It is however clear to a person skilled in the art that the invention is not restricted to details of the embodiments presented in the foregoing.

Furthermore, some of the features of the afore-disclosed example embodiments may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A computer implemented method for analyzing measurement results of a communications network (101), the method comprising

   obtaining (11, 401) measurement results, wherein the measurement results comprise multiple data entries, and wherein each data entry comprises multiple data values on a lowest hierarchy level and hierarchy information defining with which entities the entry is related to on different hierarchy levels, wherein the data values represent network performance;
   determining (402) an aggregated anomaly score for each data entry by calculating anomaly score for the data values of the data entry and aggregating the anomaly scores to determine the aggregated anomaly score for the data entry;
   choosing (403) data entries, wherein the aggregated anomaly score fulfils predefined criteria, for further analysis;
   performing (404) hierarchical clustering on the chosen entries based on dissimilarity of the chosen entries to combine at least some of the chosen entries together; and
   using (405) the hierarchically clustered entries to identify one or more anomalous entities on hierarchy levels above the lowest hierarchy level for controlling the communications network.

2. The method of claim 1, wherein the anomaly detection is performed using robust principal component analysis, RPCA.

3. The method of any preceding claim, wherein top n highest aggregated anomaly scores fulfil the predefined criteria.

4. The method of any preceding claim, wherein aggregated anomaly scores that exceed a predefined threshold fulfil the predefined criteria.

5. The method of any preceding claim, wherein the data values comprise observed data values aggregated over a predefined period of time.

6. The method of any preceding claim, wherein the hierarchy levels relate to subscription types and/or network devices and/or technology types and/or logical network entities.

7. The method of any preceding claim, further comprising using the hierarchically clustered entries and/or the identified one or more anomalous entities on hierarchy levels above the lowest hierarchy level for making decisions on controlling (14) the communications network.

8. An apparatus (20, 111) comprising

   a processor (21), and
   a memory (22) including computer program code; the memory and the computer program code configured to, with the processor, cause the apparatus to perform the method of any one of claims 1-7.

9. A computer program comprising computer executable program code (23) which when executed by a processor causes an apparatus to perform the method of any one of claims 1-7.

## Patentansprüche

1. Computer-implementiertes Verfahren zur Analyse von Messergebnissen eines Kommunikationsnetzes (101), wobei das Verfahren umfasst:

   Erhalten (11, 401) von Messergebnissen, wobei die Messergebnisse mehrere Dateneinträge umfassen, und wobei jeder Dateneintrag mehrere Datenwerte auf einer untersten hierarchischen Ebene und hierarchische Informationen, die definieren, auf welche Entitäten der Eintrag auf unterschiedlichen hierarchischen Ebenen bezogen ist, umfasst, wobei die Datenwerte eine Netzleistung darstellen;
   Bestimmen (402) eines aggregierten Anomalie-Scores für jeden Dateneintrag durch Berechnen eines Anomalie-Scores für die Datenwerte des Dateneintrags und Aggregieren der Anomalie-Scores zur Bestimmung des aggregierten Anomalie-Scores für den Dateneintrag;
   Auswählen (403) von Dateneinträgen, wobei der aggregierte Anomalie-Score vordefinierte Kriterien erfüllt, zur weiteren Analyse;
   Ausführen (404) einer hierarchischen Clusterbildung an den ausgewählten Einträgen basierend auf der Unterschiedlichkeit der ausgewählten Einträge, um zumindest einige der ausgewählten Einträge miteinander zu kombinieren; und
   Verwenden (405) der hierarchisch geclusterten Einträge zum Identifizieren einer oder mehrerer anomaler Entitäten auf hierarchischen Ebenen oberhalb der untersten hierarchischen Ebene für die Steuerung des Kommunikationsnetzes.

2. Verfahren nach Anspruch 1, wobei die Anomalieerkennung mit Hilfe einer robusten Hauptkomponentenanalyse, RPCA, ausgeführt wird.

3. Verfahren nach einem vorhergehenden Anspruch, wobei die oberen n höchsten aggregierten Anomalie-Scores die vordefinierten Kriterien erfüllen.

**4.** Verfahren nach einem vorhergehenden Anspruch, wobei die aggregierten Anomalie-Scores, die einen vordefinierten Schwellenwert überschreiten, die vordefinierten Kriterien erfüllen.

**5.** Verfahren nach einem vorhergehenden Anspruch, wobei die Datenwerte beobachtete Datenwerte umfassen, die über einen vordefinierten Zeitraum aggregiert werden.

**6.** Verfahren nach einem vorhergehenden Anspruch, wobei die hierarchischen Ebenen sich auf Abonnementarten und/oder Netzgeräte und/oder Technologiearten und/oder logische Netzentitäten beziehen.

**7.** Verfahren nach einem vorhergehenden Anspruch, ferner umfassend: Verwenden der hierarchisch geclusterten Einträge und/oder der identifizierten einen oder mehreren anomalen Entitäten auf hierarchischen Ebenen oberhalb der untersten hierarchischen Ebene zum Treffen von Entscheidungen über die Steuerung (14) des Kommunikationsnetzes.

**8.** Vorrichtung (20, 111) umfassend:

einen Prozessor (21), und
einen Speicher (22), der einen Computerprogrammcode aufweist; wobei der Speicher und der Computerprogrammcode so ausgelegt sind, dass sie mit dem Prozessor die Vorrichtung dazu veranlassen, das Verfahren nach einem der Ansprüche 1 bis 7 auszuführen.

**9.** Computerprogramm, das einen computerausführbaren Programmcode (23) umfasst, der, wenn er durch einen Prozessor ausgeführt wird, eine Vorrichtung dazu veranlasst, das Verfahren nach einem der Ansprüche 1 bis 7 auszuführen.

## Revendications

**1.** Procédé mis en œuvre par ordinateur pour analyser des résultats de mesure d'un réseau de communication (101), ledit procédé comprenant les étapes consistant à :

obtenir (11, 401) des résultats de mesure, les résultats de mesure comprenant plusieurs entrées de données, et chaque entrée de données comprenant plusieurs valeurs de données à un niveau hiérarchique le plus bas et des informations hiérarchiques définissant à quelles entités l'entrée se rapporte sur différents niveaux hiérarchiques, les valeurs de données représentant une puissance de réseau;
déterminer (402) un score d'anomalie agrégé pour chaque entrée de données par le calcul d'un score d'anomalie pour les valeurs de données de l'entrée de données et l'agrégation les scores d'anomalie afin de déterminer le score d'anomalie agrégé pour l'entrée de données;
choisir (403) des entrées de données, dans lesquelles le score d'anomalie agrégé satisfait à des critères prédéfinis, pour l'analyse ultérieure;
effectuer (404) un regroupement hiérarchique des entrées choisies sur la base de la dissimilarité des entrées choisies afin de combiner ensemble au moins quelques-unes des entrées choisies; et
utiliser (405) les entrées regroupées hiérarchiquement pour identifier une ou plusieurs entités anomales à des niveaux hiérarchiques supérieurs au niveau hiérarchique le plus bas afin de contrôler le réseau de communication.

**2.** Procédé selon la revendication 1, dans lequel la détection d'anomalie est effectuée à l'aide d'une analyse en composantes principales robuste, RPCA.

**3.** Procédé selon une revendication précédente quelconque, dans lequel les n scores d'anomalie agrégés les plus élevés satisfont aux critères prédéfinis.

**4.** Procédé selon une revendication précédente quelconque, dans lequel les scores d'anomalie agrégés qui dépassent un seuil prédéfini satisfont aux critères prédéfinis.

**5.** Procédé selon une revendication précédente quelconque, dans lequel les valeurs de données comprennent des valeurs de données observées agrégées sur une période prédéfinie.

**6.** Procédé selon une revendication précédente quelconque, dans lequel les niveaux hiérarchiques se rapportent à des types de souscription et/ou dispositifs de réseau et/ou types de technologie et/ou entités de réseau logiques.

**7.** Procédé selon une revendication précédente quelconque, comprenant également l'étape consistant à utiliser les entrées regroupées hiérarchiquement et/ou lesdites une ou plusieurs entités anomales identifiées à des niveaux hiérarchiques supérieurs au niveau hiérarchique le plus bas pour prendre des décisions relatives au contrôle (14) du réseau de communication.

**8.** Appareil (20, 111) comprenant

un processeur (21), et
une mémoire (22) comportant un code de programme informatique; la mémoire et le code de programme informatique étant configurés pour amener, avec le processeur, l'appareil à effectuer le procédé selon l'une des revendications 1 à 7.

**9.** Programme informatique comprenant un code de programme informatique exécutable par ordinateur (23) qui, lorsqu'il est exécuté par un processeur, amène un appareil à effectuer le procédé selon l'une des revendications 1 à 7.

11
12
101
111
14
13

Fig. 1

I/O
U/I
MEM
25
22
24
SW
23
Processor
21
20

Fig. 2

Country x
3G
4G
Prepaid
Postpaid
Prepaid
Postpaid
Site 1
Site 2
Site 1
Site 2
Site 1
Site 2
Site 1
Site 2

**Fig. 3**

Table 1 401

| Hierarchy information | Call drops | Call attempts | SMS failures |
|---|---|---|---|
| 3G – Prepaid – Site1 | 0 | 5 | 0 |
| 3G – Prepaid – Site2 | 2 | 20 | 0 |
| 3G – Postpaid – Site1 | 0 | 10 | 0 |
| 3G – Postpaid – Site2 | 0 | 56 | 0 |
| 4G – Prepaid – Site1 | 1 | 12 | 0 |
| 4G – Prepaid – Site2 | 0 | 12 | 0 |
| 4G – Postpaid – Site1 | 8 | 48 | 1 |
| 4G – Postpaid – Site2 | 6 | 36 | 3 |

Table 2 402

| Hierarchy information | Call drops | Call attempts | SMS failures | Aggregated anomaly score |
|---|---|---|---|---|
| 3G – Prepaid – Site1 | 0.25 | 1.03 | -0.18 | 1.10 |
| 3G – Prepaid – Site2 | 0.87 | 3.92 | 0.36 | 4.15 |
| 3G – Postpaid – Site1 | 0.17 | 2.55 | -0.16 | 2.56 |
| 3G – Postpaid – Site2 | 0.31 | 6.21 | 0.37 | 6.89 |
| 4G – Prepaid – Site1 | 0.89 | 2.75 | 0.03 | 3.67 |
| 4G – Prepaid – Site2 | 0.05 | 1.56 | -0.16 | 2.45 |
| 4G – Postpaid – Site1 | 2.30 | 5.26 | 0.83 | 8.39 |
| 4G – Postpaid – Site2 | 1.95 | 4.66 | 1.38 | 7.99 |

Table 3 403

| Hierarchy information | Call drops | Call attempts | SMS failures | Aggregated anomaly score |
|---|---|---|---|---|
| 3G – Prepaid – Site2 | 0.87 | 3.92 | 0.36 | 4.15 |
| 3G – Postpaid – Site2 | 0.31 | 6.21 | 0.37 | 6.89 |
| 4G – Postpaid – Site1 | 2.30 | 5.26 | 0.83 | 8.39 |
| 4G – Postpaid – Site2 | 1.95 | 4.66 | 1.38 | 7.99 |

Table 4 404

| Hierarchy information | Call drops (average) | Call attempts (average) | SMS failures (average) | Aggregated anomaly score (average) | Cluster |
|---|---|---|---|---|---|
| 3G – Prepaid – Site2 | 0.87 | 3.92 | 0.36 | 4.15 | 1 |
| 3G – Postpaid – Site2 | 0.31 | 6.21 | 0.37 | 6.89 | 2 |
| 4G – Postpaid | 2.13 | 4.96 | 1.10 | 8.19 | 3 |

405

**Fig. 4**

501
3G – Prepaid – Site2
3G – Postpaid – Site2
4G – Postpaid – Site1
4G – Postpaid – Site2

**Fig. 5**

Country x
601
3G
4G
Prepaid
Postpaid
Prepaid
Postpaid
Site 1
Site 2
Site 1
Site 2
Site 1
Site 2
Site 1
Site 2

**Fig. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- Automatic fault detection and diagnosis in cellular networks using operations support systems data. **REZAEI SAMIRA et al.** NOMS 2016 - 2016 IEEE/IFIP NETWORK OPERATIONS AND MANAGEMENT SYMPOSIUM. IEEE, 25 April 2016, 468-473
- **CANDÈS, EMMANUEL J. et al.** Robust principal component analysis?. *Journal of the ACM (JACM)*, 2011, vol. 58.3, 1-37